(19) **Europäisches Patentamt / European Patent Office / Office européen des brevets**

(11) **EP 1 461 914 B1**

(12) **EUROPEAN PATENT SPECIFICATION**

(45) Date of publication and mention
of the grant of the patent:
**16.09.2009   Bulletin 2009/38**

(51) Int Cl.:
***H04L 12/56*** (2006.01)

(21) Application number: **01985443.9**

(22) Date of filing: **28.12.2001**

(86) International application number:
**PCT/EP2001/015371**

(87) International publication number:
**WO 2003/056766 (10.07.2003 Gazette 2003/28)**

(54) **Packet scheduling method and apparatus**

Verfahren und Vorrichtung zur Paketablaufsteuerung

Procédé et dispositif d'ordonnancement de paquets

(84) Designated Contracting States:
**AT BE CH CY DE DK ES FI FR GB GR IE IT LI LU
MC NL PT SE TR**

(43) Date of publication of application:
**29.09.2004   Bulletin 2004/40**

(73) Proprietor: **Nokia Corporation
02150 Espoo (FI)**

(72) Inventor: **LAKKAKORPI, Jani
FIN-00200 Helsinki (FI)**

(74) Representative: **Ungerer, Olaf
Eisenführ, Speiser & Partner
Arnulfstrasse 25
80335 München (DE)**

(56) References cited:
**WO-A-00/74432          WO-A-01/69851
US-A- 5 757 771          US-A- 6 094 435
US-B1- 6 317 416**

Printed by Jouve, 75001 PARIS (FR)

**Description**

FIELD OF THE INVENTION

The present invention relates to a method and apparatus for scheduling data packets in a network element of a packet data network, e.g. a router in an IP (Internet Protocol) network.

BACKGROUND OF THE INVENTION

Traditional packet data networks, e.g. IP networks, can provide all customers with Best Effort (BE) services only. The whole traffic competes equally for network resources. With development of new applications of Internet, such as voice, video and Web services, the desire of manageable and/or predictable QoS (Quality of Service) becomes stronger.

Congestion management features allow to control congestion by determining the order in which packets are sent out at an interface, and the order in which packets are dropped - if needed, based on priorities assigned to those packets. Congestion management entails the creation of queues, assignment of packets to those queues based on a classification of the packet, and scheduling of the packets in a queue for transmission. There are numerous types of queuing mechanisms, each of which allows to specify creation of a different number of queues, affording greater or lesser degrees of differentiation of traffic, and to specify the order in which the traffic is sent.

During periods with light traffic, that is, when no congestion exists, packets are sent out the interface as soon as they arrive. During periods of transmit congestion at the outgoing interface, packets arrive faster than the interface can send them. If congestion management features are used, packets accumulating at an interface are either queued until the interface is free to send them, or dropped if the congestion is heavy, and the packet is marked as low priority packet. Packets are then scheduled for transmission according to their assigned priority and the queuing mechanism configured for the interface. A respective router of the packet data network determines the order of packet transmission by controlling which packets are placed in which queue and how queues are serviced with respect to each other.

Queuing types for congestion management QoS control are e.g. FIFO (First-in-First-Out), Weighted Fair Queuing (WFQ) and Priority Queuing (PQ). With FIFO, transmission of packets out the interface occurs in the order the packets arrive. WFQ offers dynamic, fair queuing that divides bandwidth across traffic queues based on weights. And, with PQ, packets belonging to one priority class of traffic are sent before all lower priority traffic to ensure timely delivery of those packets.

Heterogeneous networks include many different protocols used by applications, giving rise to the need to prioritize traffic in order to satisfy time-critical applications while still addressing the needs of less time-dependent applications, such as file transfer. Different types of traffic sharing a data path through the network can interact with one another in ways that affect their application performance. If a network is designed to support different traffic types that share a single data path between routers, congestion management techniques should be applied to ensure fairness of treatment across various traffic types.

For situations in which it is desirable to provide consistent response time to heavy and light network users alike without adding excessive bandwidths, the solution is WFQ. WFQ is a flow-based queuing algorithm which does two things simultaneously. It schedules interactive traffic to the front of the queue to reduce response time, and it fairly shares the remaining bandwidth between high bandwidth flows, wherein the bandwidth indicates the number of bits per second which can be Output from the router interface.

WFQ ensures that queues do not starve for bandwidth, and that traffic gets predictable service. Low-volume traffic streams which make up the majority of traffic receive preferential service, so that their entire offered loads are transmitted in a timely fashion. High-volume traffic streams share the remaining capacity or band-width proportionally between them. WFQ is designed to minimize configuration effort and adapts automatically to changing network traffic conditions in that it uses whatever bandwidth is available to forward traffic from lower priority flows if no traffic from higher priority flows is present. This is different from Time Division Multiplexing (TDM) which simply carves up the bandwidth and Jets it go unused if no traffic is present for a particular traffic type.

Further details of WFQ can be gathered from Hui Zhang, "Service Disciplines for Guaranteed Performance Service in Packet-Switching Networks", in Proceedings of the IEEE, Volume 83, No. 10, October 1995, and from "Weighted Fair Queuing (WFQ)", Cisco Systems, Inc., http://www.cisco.com/warp/public/732/Tech/wfq/.

Assured Forwarding (AF) is an IETF standard in the field of Differentiated Services. Routers implementing AF have to allocate certain resources (buffer space and bandwidth) to different traffic aggregates. Each of the four AF classes has three drop precedences: in the event of congestion, packets with low drop precedence (within a class) are dropped first. Assured Forwarding can basically be implemented with any weight-based scheduling mechanism e.g., with Cisco's Class-Based Weighted Fair Queueing (CB-WFQ). The mutual relationships of different AF classes are open, but one reasonable approach is to use them as delay classes. This approach, however, demands automatic weight adjustments. If weight for a particular AF class stays the same while the amount of traffic in this class increases, delay in this AF class will also increase (assuming that the output link is congested).

Especially for real time traffic (such as streaming video), it is essential to keep the delays in different output queues as predictable as possible. Bearing this in mind, it is not sufficient to adaptively change only queue weights. If the queue size remains constant while the weight is changed, also the maximum queuing delay changes. Thus, an IP router with multiple output queues per interface needs a maximum size and weight for each queue. Setting of these queue sizes and weights can be quite difficult if the traffic mix is unknown and not stable.

Further details of Differentiated Services, Assured Forwarding and different queueing mechanisms can be gathered e.g. from Kalevi Kilkki, "Differentiated Services for the Internet", Macmillan Technical Publishing, ISBN 1-57870-132-5, 1999.

US 6,317,416 B1 representing the closest prior art discloses a method of fair queue servicing at a queuing point in a multi-service class packet switched network, wherein incoming packets are received in buffers and outgoing packets are scheduled by a weighted fair queue scheduler. Real-time information of buffer usage along with a minimum band-width requirement is used to dynamically modify the weights of the weighted fair queue scheduler.

Moreover, WO 01/69851 A2 discloses a method and an apparatus for allocating limited network resources, such as bandwidth and buffer memory, among various categories of data. A scheduler software adjusts the service weights associated with various data categories in order to regulate packet loss and delay. A central control software monitors network traffic conditions and regulates traffic at selected ingresses in order to reduce congestion at downstream bottlenecks.

## SUMMARY OF THE INVENTION

It is therefore an object of the present Invention to provide a packet scheduling method and apparatus, by means of which predictability of queuing delays can be improved.

In order to achieve the aforementioned and further objects, according to a first aspect of the present invention, there is provided a method of scheduling data packets in a network element of a packet data network, said method comprising the step of:

a) assigning respective weights to at least two data packet queues, said weights determining a transmit order for queued data packets of said at least two data packet queues, wherein said respective weights are determined based on a moving average of at least one traffic characteristic at said respective data packet queue;
characterized by the further step of

b) adjusting the respective sizes of said at least two data packet queues, wherein said respective sizes are adjusted based on the respective weight of the respective data packet queue, the respective output link bandwidth of said network element, and a maximum per-hop delay of said respective data packet queue;

wherein the steps a) and b) are repeated at a timing triggered by at least one predetermined parameter indicating a change in the traffic mix routed through said network element or within a set of network elements.

In accordance with a second aspect of the present invention, there is provided a network element for scheduling data packets in a packet data network, said network element comprising:

weight control means for assigning respective weights to at least two data packet queues, said weights determining a transmit order for queued data packets of said at least two data packet queues, wherein said respective weights are determined based on a moving average of at least one traffic characteristics at said respective data packet queue;
further characterized by
size adjusting means for adjusting the respective sizes of said at least two data packet queues, wherein said respective sizes are adjusted based on the respective weight of the respective data packet queue, the respective output link bandwidth of said network element, and a maximum per-hop delay of said respective data packet queue;

wherein said network element is arranged to repeat said assigning and said adjusting at timing intervals triggered by at least one predetermined parameter indicating a change in the traffic mix routed through said network element or within a set of network elements.

Accordingly, in addition to weights, queue sizes are also set adaptively at the same time. Thereby, the maximum queuing delay in every queue can be kept as predictable as possible by binding the weight and size for each output queue together. Thus, an adaptation to changes in the traffic mix is achieved.

The at least one predetermined parameter may comprise at least one of

- weight of the respective one of said at least two data packet queues
- output link bandwidth of said network element, and
- desired per-hop maximum delay.

Preferably, predetermined minimum weights can be used for said at least two data packet queues. The respective weights may be converted into byte limits which can be taken from each of said at least two data packet queues in its turn.

The size adjusting means may be arranged to adjust the respective size of said at least two data packet queues based an at least one of the weight of the respective one of said at least two data packet queues, the output link bandwidth of said network element, and the desired per-hop maximum delay.

## BRIEF DESCRIPTION OF THE DRAWINGS

In the following, the present invention will be described in greater detail based an a preferred embodiment with reference to the accompanying drawing figures, in which:

Fig. 1 shows a schematic block diagram of a packet scheduling architecture according to the preferred embodiment; and

Fig. 2 shows a schematic flow diagram of a scheduling method according to the preferred embodiment.

## DESCRIPTION OF THE PREFERRED EMBODIMENT

The preferred embodiment will now be described based on a packet scheduling architecture for output queues in an IP router.

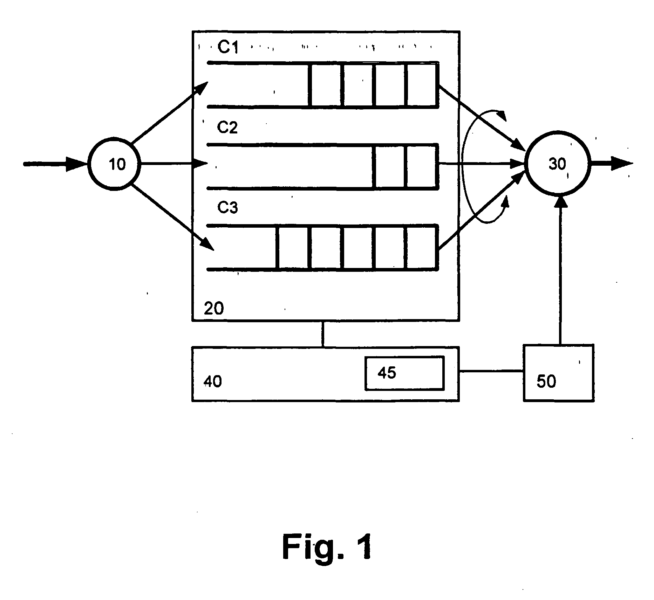

According to Fig. 1, the scheduling architecture according to the preferred embodiment is based on a scheme which provides bandwidth allocation to all network traffic. To achieve this, a classifier 10 is provided to classify traffic into different classes, i.e. to select packets based the content of packet headers, e.g. DiffServ Code Point (DSCP). However, any other type of classification based on predetermined characteristics of the received traffic can be applied.

The classifier 10 places packets of various conversations in queues C1 to C3 for transmission. The order of removal from the queues C1 to C3 is determined by weights allocated to them. The queues C1 to C3 are arranged in a configurable queuing buffer resource architecture 20.

A scheduler 30 is provided to assign a weight to each flow, i.e. to each of the queues C1 to C3, which weight determines the transmit order for queued packets. The assigned weight may be determined by the required QoS, the desired flow throughput, and the like. Based on the assigned weights, the scheduler 30 supplies queued packets from the queues C1 to C3 to a transmit queue, from which they are output to an output link towards the IP network.

A weight setting unit 50 is arranged to control the scheduler 30 to adjust the respective weights $weight_i$ of the queues C1 to C3 at predetermined intervals, i.e. every T seconds, based on the following procedure:

$$traffic_i := a \cdot traffic_i + (1-a) \cdot traffic_{i,last\ period}.$$

where $0 < a < 1$

$$weight_i = F(traffic_i) / (\sum_{i=1}^{N} F(traffic_i)),$$

wherein traffic, denotes the moving average of traffic characteristics (e.g. byte count, flow count etc.) at queue $C_1$ within the measurement period T. It is noted that in the example shown in Fig. 1, N equals three, since three queues are provided in the queuing buffer resource architecture 20. The parameter a, i.e. the weight for the previous moving average value and the new moving average value, can be chosen freely. Furthermore, $traffic_{i,\ last\ period}$ denotes the traffic characteristics (e.g. number of bytes arrived) within the last measurement period, and F denotes any suitable predetermined functional relationship between the traffic characteristic and a desired weight. After the moving averages have been updated, the respective counters provided e.g. in the weight setting unit 50 are set to zero in order to start a new counting operation. The weight setting unit 50 may be arranged to use predetermined minimum weights for each queue.

The measurement period T may be set and controlled by a timer 45 which may be provided in a size setting unit 40, as indicated in Fig. 1, or alternatively in the weight setting unit 50 or in any other unit or as a separate unit for the IP router.

The sizes of queues C1 to C3, i.e. the maximum number of data packets in the queues, are set by the size setting unit 40 according to determined parameters indicating the traffic mix. In the preferred embodiment, these parameters are the assigned weights, the output link bandwidth and the desired per-hop maximum delays. However, other suitable parameters may be used for this purpose. The size setting may be performed based an the following equation:

$$size_i = F(weight_i, OLB, delay_i),$$

wherein weight; denotes the weight assigned to the queue C;, OLB denotes the output link bandwidth of the output link of the IP router, and delay; denotes the desired per-hop maximum delay of the queue C. It is noted that the function F may be any suitable function defining a relationship between the allowed queue size and the traffic-specific parameters to thereby keep the delays in the different queues C1 to C3 as predictable as possible.

The scheduler 30 is arranged to convert the weights into bytes which can be de-queued (taken) from one of the queues C1 to C3 in its turn.

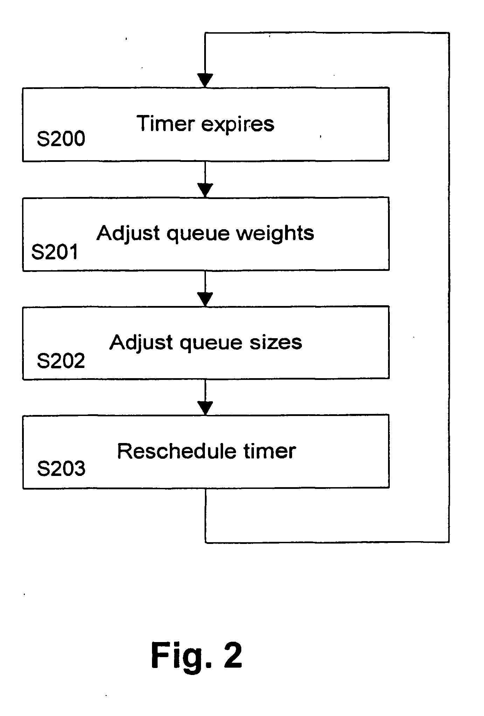

Fig. 2 shows a schematic flow diagram of the scheduling operation according to the preferred embodiment.

When the timer 45 has expired in step S200, the procedure proceeds to step S201 where the queue weights are adjusted by the weight setting unit 50 according to any changes in the traffic parameters, i.e. any changes in the traffic mix. Then, the queue sizes are adjusted in step S202 by the size setting unit 40, e.g. using the weight information determined in the weight setting unit 50. Thereafter, the timer 45 is rescheduled or reset to zero (step S203) in order to start a new measurement period or cycle for determining the moving average of bytes and/or other parameters required for the scheduling operation. Finally, the procedure loops back to the initial step S200 and applies the determined sizes and weights until the timer 45 expires again. It is noted that some other events (than expired timer are used to trigger the adjustment process.

In the following, a specific implementation example of the preferred embodiment is described. In this example, the sizes (in bytes) of the queues C1 to C3 are set according to the queue weights, output link bandwidth and desired per-hop maximum queuing delay, using the following equation:

$$size_i := (weight_i \cdot OLB \cdot delay_i)/8.$$

It is noted that the blocks indicated in the architecture of Fig. 1 may be implemented as software routines controlling a corresponding processor in the IP router, or as discrete hardware units.

The proposed scheduling operation and architecture removes the need to manually update router queue sizes and provides an adaptive change of queue sizes and queue weights for output queues of routers or any other suitable network elements having a queuing function. Thereby, the scheduling can be adapted to changes in the traffic mix to achieve more predictable maximum delays.

It is noted, that the present invention is not restricted to the specific features of the above predetermined embodiment, but may vary within the scope of the attached claims. In particular, the determination of the queue size and the packet size is not restricted to the above implementation example. Any suitable weight-based scheduling scheme and way of determining suitable queue sizes based on a change in the traffic mix is intended to be covered by the present invention. Moreover, additional coefficients might be used for the different weighted queues C1 to C3 if it is intended that some queues are "faster" than others. If one or a number of priority queues have to be served before the weighted queues C1 to C3 can be served, rate limiters could be used for the priority queues so as to guarantee a minimum output link bandwidth for the weighted queues C1 to C3.

**Claims**

1. A method of scheduling data packets in a network element of a packet data network, said method comprising the step of:

   a) assigning respective weights to at least two data packet queues (C1 to C3), said weights determining a transmit order for queued data packets of said at least two data packet queues, wherein said respective weights are determined based on a moving average of at least one traffic characteristic at said respective data packet queue;

**characterized by** the further step of

b) adjusting the respective sizes of said at least two data packet queues (C1 to C3), wherein said respective sizes are adjusted based on the respective weight of the respective data packet queue, the respective output link bandwidth of said network element, and a maximum per-hop delay of said respective data packet queue;

wherein the steps a) and b) are repeated at a timing triggered by at least one predetermined parameter indicating a change in the traffic mix routed through said network element or within a set of network elements.

2. A method according to claim 1, wherein said at least one predetermined parameter comprises at least one of

- weight of the respective one of said at least two data packet queues (C1 to C3)
- output link bandwidth of said network element, and
- desired per-hop maximum delay.

3. A method according to claim 1 or 2, wherein said respective sizes are adjusted based on the following equation:

$$size_i = (weight_i \cdot OLB \cdot delay_i)/8,$$

wherein size$_i$ denotes the size of the i-th data packet queue in bytes, weight$_i$ denotes the weight of the i-th data packet queue, OLB denotes the output link bandwidth left for weighted queues of said network element, and delay$_i$ denotes the maximum per-hop delay of said i-th data packet queue.

4. A method according to any one of the preceding claims, wherein said respective weights are determined based on the following equation:

$$weight_i = F(traffic_i) / \left( \sum_{i=1}^{N} F(traffic_i) \right),$$

wherein weight$_i$ denotes the weight of the i-th data packet queue, traffic$_i$ denotes a moving average of traffic characteristics at said i-th data packet queue, F denotes a predetermined functional relationship, and N denotes the number of queues.

5. A method according to claim 5, wherein said moving average is obtained by applying respective weights (a, (1-a)) for previous information and new Information.

6. A method according to any one of the preceding claims, wherein predetermined minimum weights are used for said at least two data packet queues (C1 to C3).

7. A network element for scheduling data packets in a packet data network, said network element comprising:

weight control means (30, 50) for assigning respective weights to at least two data packet queues (C1 to C3), said weights determining a transmit order for queued data packets of said at least two data packet queues (C1 to C3), wherein said respective weights are determined based on a moving average of at least one traffic characteristics at said respective data packet queue;

further **characterized by**

size adjusting means (40) for adjusting the respective sizes of said at least two data packet queues (C1 to C3), wherein said respective sizes are adjusted based on the respective weight of the respective data packet queue, the respective output link bandwidth of said network element, and a maximum per-hop delay of said respective data packet queue;

wherein said network element is arranged to repeat said assigning and said adjusting at timing intervals triggered by at least one predetermined parameter indicating a change in the traffic mix routed through said network element or within a set of network elements.

8. A network element according to claim 7, wherein said size adjusting means (40) is arranged to adjust the respective sizes of said at least two data packet queues (C1 to C3) according to the following equation:

$$size_i := (weight_i \cdot OLB \cdot delay_i)/8,$$

wherein size; denotes the size of the i-th data packet queue in bytes, weight; denotes the weight of the i-th data packet queue, OLB denotes the output link bandwidth of said network element, and delay; denotes the maximum per-hop delay of said i-th data packet queue.

9. A network element according to claim 7 or 8 wherein said network element is an IP router.

**Patentansprüche**

1. Zeitablaufplanungsverfahren für Datenpakete in einem Netzwerkelement eines Paketdatennetzwerks, wobei das Verfahren die Schritte aufweist:

a) Zuordnen jeweiliger Gewichte zu wenigstens zwei Datenpaketwarteschlangen (C1 bis C3), wobei die Gewichte eine Übertragungsreihenfolge für in der Warteschlange stehende Datenpakete der wenigstens zwei Datenpaketwarteschlangen bestimmen, wobei die jeweiligen Gewichte basierend auf einem gleitenden Durchschnitt von wenigstens einer Verkehrseigenschaft der jeweiligen Datenpaketwarteschlange bestimmt werden; **gekennzeichnet durch** die Schritte:
b) Anpassen der jeweiligen Größen der wenigstens zwei Datenpaketwarteschlangen (C1 bis C3), wobei die jeweiligen Größe basierend auf dem jeweiligen Gewicht der jeweiligen Datenpaketwarteschlange, der jeweiligen Ausgabe-Link-Bandbreite des Netzwerkelements und einer maximalen Verzögerung je Hop der jeweiligen Datenpaketwarteschlange angepasst werden;

wobei die Schritte a) und b) in einer Zeiteinteilungen wiederholt werden, die **durch** wenigstens einen vorherbestimmten Parameter angestoßen wird, der eine Veränderung im Verkehrsmix, der **durch** das Netzwerkelement geleitet wird oder innerhalb einer Gruppe von Netzwerkelementen, anzeigt.

2. Verfahren gemäß Anspruch 1, wobei der wenigstens eine vorbestimmte Parameter aufweist

- ein Gewicht der wenigstens einen der wenigstens zwei Datenpaketwarteschlangen (C1 bis C3) und/oder
- eine Ausgabe-Link-Bandbreite des Netzwerkelements, und/oder
- eine gewünschte maximale Verzögerung je Hob.

3. Verfahren gemäß Anspruch 1 oder 2, wobei die jeweiligen Größen angepasst werden basierend auf der folgenden Gleichung:

$$size_i = (weight_i \cdot OLB \cdot delay_i)/8,$$

wobei Größe, die Größe der i-ten Datenpaketwarteschlange in Bytes bedeutet, Gewicht; das Gewicht der i-ten Datenpaketwarteschlange bedeutet, OLB die Ausgabe-Link-Bandbreite bedeutet, die für gewichtete Warteschlangen des Netzwerkelements übrig ist, und Verzögerung; die maximale je Hob der i-ten Datenpaketwarteschlange bedeutet.

4. Verfahren gemäß einem der vorhergehenden Ansprüche, wobei die jeweiligen Gewichte basierend auf der folgenden Gleichung bestimmt werden:

$$weight_i = F(traffic_i)/\left(\sum_{i=1}^{N} F(traffic_i)\right),$$

wobei Gewicht, das Gewicht der i-ten Datenpaketwarteschlange bedeutet, Verkehr einen gleitenden Durchschnitt einer Verkehrseigenschaft der i-ten Datenpaketwarteschlange bedeutet, F eine vorbestimmte funktionale Relation bedeutet und N eine Anzahl der Warteschlangen bedeutet.

5. Verfahren gemäß Anspruch 5, wobei der gleitende Durchschnitt durch Anwenden jeweiliger Gewichte (a,(1-a)) für vorausgehende Informationen und neue Informationen erhalten wird.

6. Verfahren gemäß einem der vorhergehenden Ansprüche, wobei vorbestimmte minimale Gewichte für die wenigstens zwei Datenpaketwarteschlangen (C1 bis C3) verwendet werden.

7. Netzwerkelement zur Zeitablaufplanung von Datenpaketen in einem Paketdatennetzwerk, wobei das Netzwerkelement aufweist:

Gewichtsteuermittel (30, 50) zum Zuordnen jeweiliger Gewichte zu wenigstens zwei Datenpaketwarteschlangen (C1 bis C3), wobei die Gewichte eine Übertragungsreihenfolge für in der Warteschlangen stehende Datenpakete der wenigstens zwei Datenpaketwarteschlangen (C1 bis C3) bestimmen, wobei die jeweiligen Gewichte basierend auf einem gleitenden Durchschnitt von wenigstens einer Verkehrseigenschaft der jeweiligen Datenpaketwarteschlange bestimmt werden;
weiter **gekennzeichnet durch**
Größenanpassungsmittel (40) zum Anpassen der jeweiligen Größe der wenigstens zwei Datenpaketwarteschlangen (C1 bis C3), wobei die jeweiligen Größen basierend auf dem jeweiligen Gewicht der jeweiligen Datenpaketwarteschlange, der jeweiligen Ausgabe-Link-Bandbreite des Netzwerkelements und einer maximalen Verzögerung je Hop der jeweiligen Datenpaketwarteschlange angepasst werden;
wobei das Netzwerkelement eingerichtet ist, das Zuordnen und das Anpassen an Zeiteinteilungsintervallen durchzuführen, die **durch** wenigstens einen vorbestimmten Parameter ausgelöst werden, der eine Veränderung im Verkehrsmix, der **durch** das Netzwerkelement geleitet wird oder in einer Gruppe von Netzwerkelementen, anzeigt.

8. Netzwerkelement gemäß Anspruch 7, wobei die Größenanpassungsmittel (40) eingerichtet sind, die jeweiligen Größen der wenigstens zwei Datenpaketwarteschlangen (C1 bis C3) gemäß der folgenden Gleichung anzupassen:

$$size_i: = (weight_i \cdot OLB \cdot delay_i)/8,$$

wobei Größe$_i$ die Größe der i-ten Datenpaket Warteschlangen in Bytes bedeutet, Gewicht$_i$ das Gewicht der i-ten Datenpaket Warteschlange bedeutet, OLB die Ausgabe-Link-Bandbreite des Netzwerkelements bedeutet, und Verzögerung, die maximale Verzögerung je Hob der i-ten Datenpaketwarteschlange bedeutet.

9. Netzwerkelement gemäß Anspruch 7 oder 8, wobei das Netzwerkelement ein IP-Router ist.

**Revendications**

1. Procédé d'ordonnancement de paquets de données dans un élément de réseau d'un réseau de données par paquets, ledit procédé comprenant l'étape consistant à :

a) assigner des poids respectifs à au moins deux files d'attente de paquets de données (C1 à C3), lesdits poids déterminant un ordre de transmission pour des paquets de données en file d'attente desdites au moins deux files d'attente de paquets de données, dans lequel lesdits poids respectifs sont déterminés sur la base d'une moyenne mobile d'au moins une caractéristique de trafic à ladite file d'attente de paquets de données respective ;
**caractérisé par** l'étape supplémentaire consistant à :

b) ajuster les tailles respectives desdites au moins deux files d'attente de paquets de données (C1 à C3), dans lequel lesdites tailles respectives sont ajustées sur la base du poids respectif de la file d'attente de paquets de données respective, la largeur de bande de liaison de sortie respective dudit élément de réseau et un délai maximal par saut de ladite file d'attente de paquets de données respective ;

dans lequel les étapes a) et b) sont répétées à un timing déclenché par au moins un paramètre prédéterminé indiquant un changement du mélange de trafic acheminé à travers ledit élément de réseau ou à l'intérieur d'un ensemble d'éléments de réseau.

2. Procédé selon la revendication 1, dans lequel ledit au moins un paramètre prédéterminé comprend au moins l'un de :

- le poids de celle respective desdites au moins deux files d'attente de paquets de données (C1 à C3),
- la largeur de bande de liaison de sortie dudit élément de réseau, et
- le délai maximal par saut souhaité.

3. Procédé selon la revendication 1 ou 2, dans lequel lesdites tailles respectives sont ajustées sur la base de l'équation suivante :

$$\text{taille}_i = (\text{poids}_i * \text{OLB} * \text{délai}_i)/8$$

où $\text{taille}_i$ dénote la taille de la i-ème file d'attente de paquets de données en octets, $\text{poids}_i$ dénote le poids de la i-ème file d'attente de paquets de données, OLB dénote la largeur de bande de liaison de sortie laissée pour les files d'attente pondérées dudit élément de réseau, et $\text{délai}_i$ dénote le délai maximal par saut de ladite i-ème file d'attente de paquets de données.

4. Procédé selon l'une quelconque des revendications précédentes, dans lequel lesdits poids respectifs sont déterminés sur la base de l'équation suivante :

$$poids_i = F(trafic_i)/(\sum_{i=1}^{N} F(trafic_i))$$

où $poids_i$ dénote le poids de la i-ème file d'attente de paquets de données, $trafic_i$ dénote une moyenne mobile de caractéristiques de trafic à ladite i-ème file d'attente de paquets de données, F dénote une relation fonctionnelle prédéterminée, et N dénote le nombre de files d'attente.

5. Procédé selon la revendication 4, dans lequel ladite moyenne mobile est obtenue en appliquant des poids respectifs (a, (1-a)) pour des informations précédentes et pour de nouvelles informations.

6. Procédé selon l'une quelconque des revendications précédentes, dans lequel des poids minimaux prédéterminés sont utilisés pour lesdites au moins deux files d'attente de paquets de données (C1 à C3).

7. Elément de réseau pour ordonnancer des paquets de données dans un réseau de données par paquets, ledit élément de réseau comprenant :

des moyens de contrôle de poids (30, 50) pour assigner des poids respectifs à au moins deux files d'attente de paquets de données (C1 à C3), lesdits poids déterminant un ordre de transmission pour des paquets de données en file d'attente desdites au moins deux files d'attente de paquets de données (C1 à C3), dans lequel lesdits poids respectifs sont déterminés sur la base d'une moyenne mobile d'au moins une caractéristique de trafic à ladite file d'attente de paquets de données respective ;

**caractérisé en outre par** :

des moyens d'ajustement de taille (40) pour ajuster les tailles respectives desdites au moins deux files d'attente de paquets de données (C1 à C3), dans lequel lesdites tailles respectives sont ajustées sur la base du poids respectif de la file d'attente de paquets de données respective, la largeur de bande de liaison de sortie respective dudit élément de réseau et un délai maximal par saut de ladite file d'attente de paquets de données respective ;

dans lequel ledit élément de réseau est agencé pour répéter ladite assignation et ledit ajustement à des intervalles de timing déclenchés par au moins un paramètre prédéterminé indiquant un changement du mélange de trafic acheminé à travers ledit élément de réseau ou à l'intérieur d'un ensemble d'éléments de réseau.

8. Elément de réseau selon la revendication 7, dans lequel ledit moyen d'ajustement de taille (40) est agencé pour ajuster les tailles respectives desdites au moins deux files d'attente de paquets de données (C1 à C3) selon l'équation suivante :

$$taille_i = (poids_i * OLB * délai_i)/8$$

où $taille_i$ dénote la taille de la i-ème file d'attente de paquets de données en octets, $poids_i$ dénote le poids de la i-ème file d'attente de paquets de données, OLB dénote la largeur de bande de liaison de sortie dudit élément de réseau, et $délai_i$ dénote le délai maximal par saut de ladite i-ème file d'attente de paquets de données.

9. Elément de réseau selon la revendication 7 ou 8, dans lequel ledit élément de réseau est un routeur IP.

# Fig. 1

| S200 | Timer expires |
| S201 | Adjust queue weights |
| S202 | Adjust queue sizes |
| S203 | Reschedule timer |

**Fig. 2**

## REFERENCES CITED IN THE DESCRIPTION

### Patent documents cited in the description

- US 6317416 B1

- WO 0169851 A2

### Non-patent literature cited in the description

- **Hui Zhang.** Service Disciplines for Guaranteed Performance Service in Packet-Switching Networks. *Proceedings of the IEEE,* October 1995, vol. 83 (10

- **Kalevi Kilkki.** Differentiated Services for the Internet. Macmillan Technical Publishing, 1999